# EUROPÄISCHE PATENTSCHRIFT

(11) **EP 0 713 514 B1**
(45) Veröffentlichungstag und Bekanntmachung des Hinweises auf die Patenterteilung: **28.01.1998**
(21) Anmeldenummer: 94926125.9
(22) Anmeldetag: 28.07.1994
(51) Int. Cl.: C09K 3/18

(54) **ENTEISUNGSMITTEL BZW. VEREISUNGSSCHUTZMITTEL FÜR FLUGZEUGE**
AIRCRAFT DE-ICING AND ANTI-ICING AGENTS
AGENTS DEGIVRANTS OU ANTI-GIVRE POUR AVIONS

(30) Priorität: 14.08.1993 DE 43273602
(43) Veröffentlichungstag der Anmeldung: 29.05.1996
(73) Patentinhaber: BASF AKTIENGESELLSCHAFT, 67056 Ludwigshafen (DE)
(72) Erfinder: SCHRIMPF, Hans, D-67112 Mutterstadt (DE); PFITZNER, Klaus, D-67063 Ludwigshafen (DE)
(86) Internationale Anmeldenummer: EP9402489
(87) Internationale Veröffentlichungsnummer: WO9505428

(56) Entgegenhaltungen:
- WO-A-94/05741
- DE-A- 3 229 654
- US-A- 3 362 909
- US-A- 4 585 571
- US-A- 5 043 088
- DATABASE WPI Section Ch, Week 8930, Derwent Publications Ltd., London, GB; Class A97, AN 89-215201 & HU,A,48 665 (MAGYAR SZENHIDROGENIPARI) 28. Juni 1989

## Beschreibung

Die vorliegende Erfindung betrifft Enteisungsmittel bzw. Vereisungsschutzmittel für Flugzeuge auf Basis von Glykolen und Wasser.

Flugzeugenteisungsmittel werden bei winterlichen Wetterbedingungen vor dem Start auf Flugzeuge aufgebracht, um diese zu enteisen, bzw. eine Vereisung für einen bestimmten Zeitraum zu verhindern (Vorhaltezeit). Dieses Ziel wird häufig durch Mittel erreicht, die neben einem Glykol und Wasser weiterhin Verdicker enthalten, welche die Viskosität der Enteisungsmittel erhöhen und so ein schnelles Ablaufen der Mittel vom Flugzeug verhindern. Bei den Verdickern handelt es sich beispielsweise um vernetzte, hochmolekulare Polyacrylsäuren. Die Zusammensetzung solcher verdikkerhaltigen Enteisungsmittel ist z.B. aus der DE-A 3 832 310 bekannt. Mit solchen Mitteln können lange Vorhaltezeiten erzielt werden.

Auf Flughäfen besteht heutzutage ein gesteigertes Interesse an einer stofflichen Wiederverwertung von Enteisungsflüssigkeiten. Dabei wird versucht, insbesondere die Glykolkomponente destillativ vom gebrauchten Mittel abzutrennen und zum Lösen weiterer Enteisungsmittelkomponenten zu nutzen.

Ein solches Verfahren ist jedoch für verdickerhaltige Mittel nicht wirtschaftlich durchführbar, da die Verdicker in ihrer Wirkung äußerst empfindlich auf geringe Veränderungen der Zusammensetzungen der Enteisungsmittel reagieren und deshalb ein großer technischer Aufwand zum Abmischen solcher Mittel unter Verwendung wiederaufgearbeiteten Glykols erforderlich wird.

Die ISO-Norm 11075 beschreibt die technischen Anforderungen an unverdickte Flugzeugenteisungsmittel mit einem Glykolgehalt von über 80 Gew.-%, die in der Praxis auf wassergehalte von 25 bis 50 Gew.-% Wasser verdünnt werden. Der Nachteil solcher Mittel, wie sie z. B. aus der Spezifikation MIL A-8243 D der US-Airforce bekannt sind, liegt in ihrer geringen Vorhaltezeit, die in der Praxis häufig eine wiederholte Enteisung von Flugzeugen erforderlich macht, wenn sich der Start eines behandelten Flugzeuges um wenige Minuten verzögert. Eine Aufarbeitung solcher Enteisungsmittel und die Wiederverwendung der Glykolkomponente ist dagegen technisch relativ unproblematisch.

Es bestand daher die Aufgabe, verdickerfreie Enteisungs- bzw. Vereisungsschutzmittel bereitzustellen, die lange Vorhaltezeiten haben. Insbesondere bestand die Aufgabe, solche Mittel zu finden, die die Mindestvorhaltezeit der ISO-Norm 11075 von 3 Minuten deutlich überschreiten.

Demgemäß wurden verdickerfreie Enteisungsmittel bzw. Vereisungsschutzmittel für Flugzeuge auf Basis von Glykolen und Wasser gefunden, die im wesentlichen folgende Komponenten aufweisen:
a) 80 bis 92 Gew.-% eines Alkylenglykols mit 2 bis 3 Kohlenstoffatomen, eines Oxalkylenglykols mit 4 bis 6 Kohlenstoffatomen oder deren Gemische,
b) 0,05 bis 1,0 Gew.-% mindestens eines nichtionischen Tensids aus Alkoholen mit 10 bis 20 Kohlenstoffatomen, die mit 1 bis 10 Äquivalenten Ethylenoxid, Propylenoxid oder deren Gemischen alkoxyliert sind,
c) 0,1 bis 0,8 Gew.-% einer polymeren Carbonsaure mit einem Molekulargewicht von 1.000 bis 10.000,
d) 0 bis 1,5 Gew.-% Ammoniak oder eines Hydroxyalkylamins,
e) 0 bis 1,5 Gew.-% eines weiteren Tensids,
f) 0,01 bis 0,8 Gew.-% mindestens eines Korrosionsinhibitors und
g) Wasser als restlichen Gewichtsanteil.

Die Gewichtsprozente beziehen sich immer auf das Gesamtgewicht des Mittels, wobei die Wassermenge immer zur Ergänzung auf 100 % dient.

Im einzelnen werden folgende Komponenten in den erfindungsgemäßen Mitteln verwendet:
a) Bei dieser Komponente handelt es sich vorzugsweise um Propylenglykol und Diethylenglykol. Komponente a) wird vorzugsweise in Mengen von 85 bis 90 Gew.-% verwendet.
b) Diese Tensidkomponente besteht bevorzugt aus C₁₃-C₁₅-Oxoalkoholen, die mit 1 bis 10 Äquivalenten Ethylenoxid alkoxyliert sind, vorzugsweise mit 3 bis 5 Molekülen. Es kommen aber auch Tenside auf Basis von Laurylalkohol, Myristylalkohol, Palmitylalkohol und Stearylalkohol sowie von Talgfettalkoholen in Betracht. Es können auch Mischungen der genannten Tenside verwendet werden. Die Tenside sind im Handel erhältlich oder sie sind nach bekannten Methoden herstellbar, etwa durch Umsetzung der genannten Alkohole mit 1 bis 10 Äquivalenten Ethylen- bzw. Propylenoxid. Die bevorzugte Menge des Tensids beträgt 0,1 bis 0,5 Gew.-%.
c) Als polymere Carbonsäure werden vorzugsweise Polyacrylate eingesetzt, die bis zu 15 Gew.-%, bezogen auf die Polymeren, Comonomere wie Maleinsäureanhydrid und Itaconsäure enthalten können. 0,2 bis 0,5 Gew.-% ist die bevorzugte Menge für dieses Polymer.
d) Ammoniak und Hydroxyalkylamine wie Monoethanolamin, Diethanolamin und Triethanolcamid werden vorzugsweise in Mengen von 0,1 bis 0,5 Gew.-% in den erfindungsgemäßen Mitteln verwendet.
e) Vorzugsweise enthalten die erfindungsgemäßen Mittel ein von Komponente b) verschiedenes Tensid in Mengen von 0,05 bis 1,0 Gew.-%, besonders bevorzugt 0,1 bis 0,4 Gew.-%. Insbesondere bei Verwendung von Alkoholen mit weniger als 6 Oxyalkylengruppen als Komponente b) hat es sich als vorteilhaft erwiesen, den Mitteln ein weiteres Tensid zuzusetzen.
   Als Tenside kommen anionische Tenside wie Alkalimetallsalze von Alkylarylsulfonaten, z.B. Natriumdodecylbenzolsulfonat, und Fettalkohol(ether)sulfate in Betracht, aber auch kationische Tenside. Ein typisches anionisches Tensid ist auch mit 2 Mol Ethylenoxid umgesetzter, danach sulfatierter und mit Natronlauge neutralisierter C₁₂-C₁₄-Fettalkohol (Laurylalkohol).
   Bevorzugt werden aber nichtionische Tenside wie Tenside aus C₁₃-C₁₅-Alkoholen, die mit 11 bis 20 Molekülen Ethylenoxid alkoxyliert sind, weiterhin Fettsäureamide und zwitterionische Verbindungen wie Glycinderivate. Besonders bevorzugt ist N-Methyl-N-oleoylglycin (auch als N-Oleoylsarkosin oder Medialansäure bezeichnet).
f) Komponente f) umfaßt Korrosionsinhibitoren, wie sie für Flüssigkeiten auf Basis eines Glykols und Wassers gebräuchlich sind. Es kommen z.B. Natriumnitrat, das Kalium- oder Natriumsalz der Sebazinsäure, Benzotriazol und Tolutriazol in Betracht.
g) Bei dieser Komponente handelt es sich vorzugsweise um vollentsalztes Wasser.

Die Herstellung der Enteisungsmittel erfolgt durch Mischen der Komponenten in beliebiger Reihenfolge in einem Rührbehälter. Vorteilhaft ist es, die Komponenten b) bis f) in das Glykol a) zu geben und dann das Wasser g) zuzusetzen.

Die erfindungsgemäßen unverdickten Enteisungsmittel weisen lange Vorhaltezeiten auf, die die für solche Mischungen in der ISO-Norm geforderte Mindestzeit von 3 Minuten deutlich übertreffen. Eine Verlängerung der Vorhaltezeit erhöht die Sicherheitsreserven in solchen Fällen, in denen es zur kurzzeitigen Startverschiebung des Flugzeuges kommt. Weiterhin weisen die erfindungsgemäßen Mittel eine niedrige Oberflächenspannung auf, was zu einer Verminderung des Auftriebsverlustes beim Start beiträgt.

### Beispiele

### Beispiel 1

Komponenten:
a) 89,0 Gew.-% Diethylenglykol
b) 0,3 Gew.-% C₁₃-C₁₅-Oxoalkohol, alkoxyliert mit 3 Äquivalenten Ethylenoxid
c) 0,35 Gew.-% Polyacrylsäure, Molmasse ca. 4000,
d) 0,50 Gew.-% Triethanolamin
e) 0,20 Gew.-% N-Methyl-N-oleoylglycin
f) 0,05 Gew.-% Benzotriazol
g) 9,6 Gew.-% Wasser

Die Komponenten b) - f) wurden zu a) gegeben und unter Rühren mit g) versetzt.

### Beispiel 2

Komponenten:
a) 89,0 Gew.-% 1,2-Propylenglykol
b) 0,4 Gew.-% C₁₃-C₁₅-Oxoalkohol, alkoxyliert mit 5 Äquivalenten Ethylenoxid
c) 0,40 Gew.-% Polyacrylsäure, Molmasse ca. 4000,
d) 0,25 Gew.-% Diethanolamin
e) 0,20 Gew.-% N-Methyl-N-oleoylglycin
f) 0,05 Gew.-% Benzotriazol
g) 9,7 Gew.-% Wasser

### Beispiel 3

a) 89,00 Gew.-% 1,2-Propylenglykol
b) 0,15 Gew.-% eines C₁₂-C₁₄-Fettalkohols (Laurylalkohol), oxethyliert mit 2 Mol Ethylenoxid, sulfatiert und mit Natronlauge neutralisiert
c) 0,30 Gew.-% eines C₁₃-C₁₅-Oxoalkohols, oxethyliert mit 3-5 Molekülen Ethylenoxid
d) 0,40 Gew.-% einer polymeren Carbonsäure mit einer Molmasse von ca. 4000, neutralisiert mit NaOH
e) 0,05 Gew.-% Benztriazol
f) 0,20 Gew.-% Triethanolamin
g) Rest Gew.-% Wasser

### Beispiel 4

a) 82,00 Gew.-% 1,2-Propylenglykol
b) 0,30 Gew.-% eines C₁₂-C₁₄-Oxoalkohols, oxethyliert mit 8 Molekülen Ethylenoxid
c) 0,01 Gew.-% N-Oleoyl-sarcosin
d) 0,05 Gew.-% Benztriazol
e) 0,07 Gew.-% Natriumwasserglas
f) 0,40 Gew.-% einer polymeren Carbonsäure mit einer Molmasse von ca. 4000, neutralisiert mit NaOH
g) Rest Gew.-% Wasser

### Vergleichsbeispiel 1

Komponenten:
a) 89,0 Gew.-% 1,2-Propylenglykol
b') 0,05 Gew.-% Natrium-di-(2-ethylhexyl-sulfosuccinat)
c') 0,09 Gew.-% Dikaliumhydrogenphosphat
d') 0,5 Gew.-% Na-Tolutriazol
e') 10,36 Gew.-% Wasser

Diese Enteisungsflüssigkeit wurde nach der Spezifikation MIL A-82 43 D der US-Airforce hergestellt.

### Vergleichsbeispiel 2

Komponenten:
a) 89,0 Gew.-% 1,2-Propylenglykol
b') 0,05 Gew.-% Dodecylbenzolsulfonat
c') 0,09 Gew.-% Dikaliumhydrogenphosphat
d') 10,86 Gew.-% Wasser

### Vergleichsbeispiel 3

Komponenten:
a) 84,0 Gew.-% Diethylenglykol 5,0 Gew.-% 1,2-Propylenglykol
b) -
c) 0,35 Gew.-% Polyacrylsäure, Molmasse ca. 4000,
d) 0,35 Gew.-% Triethanolamin
e) 0,4 Gew.-% Dodecylbenzolsulfonat
f) 0,05 Gew.-% Benzotriazol
g) 9,85 Gew.-% Wasser

Die Herstellung erfolgte analog zu Beispiel 1.

Alle Mittel wurden folgendermaßen getestet:
1. Bestimmung der Vorhaltezeit (hold over time) gegen Wiedergefrieren nach dem Water Spray Edurance Test gemäß ISO 11075, A 2.1. mit Enteisungsflüssigkeit, die 50 : 50 mit hartem Wasser gemäß ISO 11075 verdünnt wurde
2. Oberflächenspannung gemäß ASTM D 1331

Die folgende Tabelle gibt die Testergebnisse für die Enteisungsflüssigkeiten wieder:

| Beispiel | Vorhaltezeit Water spray test (ISO 11075) [min] | Vorhaltezeit High humidity test (ISO 11075) [min] | Oberflächenspannung bei 23°C (ASTM D 1331) [mN/m] |
|---|---|---|---|
| Beispiel 1 | 10 | 60 | 29 |
| Beispiel 2 | 9 | 80 | 29 |
| Beispiel 3 | 6 | 80 | 32 |
| Beispiel 4 | 6 | 60 | 32 |
| Vergleichsbeispiel 1 | 3 | 20 | 33 |
| Vergleichsbeispiel 2 | 3 | 10 | 34 |
| Vergleichsbeispiel 3 | 5 | 22 | 34 |

Die erfindungsgemäßen Enteisungs- bzw. Vereisungsschutzflüssigkeiten weisen Vorhaltezeiten auf, die deutlich über den Vorhaltezeiten der Vergleichsbeispiele liegen. Weiterhin ist die Oberflächenspannung der erfindungsgemäßen Mittel niedriger als die der Vergleichsmittel.

## Patentansprüche

1. Enteisungsmittel bzw. Vereisungsschutzmittel für Flugzeuge auf der Basis von Glykolen und Wasser, im wesentlichen enthaltend:
a) 80 bis 92 Gew.-% eines Alkylenglykols mit 2 bis 3 Kohlenstoffatomen, eines Oxalkylenglykols mit 4 bis 6 Kohlenstoffatomen oder deren Gemische,
b) 0,05 bis 1,0 Gew.-% mindestens eines nichtionischen Tensids aus Alkoholen mit 10 bis 20 Kohlenstoffatomen, die mit 1 bis 10 Äquivalenten Ethylenoxid, Propylenoxid oder deren Gemischen alkoxyliert sind,
c) 0,1 bis 0,8 Gew.-% einer polymeren Carbonsäure mit einem Molekulargewicht von 1.000 bis 10.000,
d) 0 bis 1,5 Gew.-% Ammoniak oder eines Hydroxyalkylamins,
e) 0 bis 1,5 Gew.-% eines weiteren Tensids,
f) 0,01 bis 0,8 Gew.-% mindestens eines Korrosionsinhibitors und
g) Wasser als restlichen Gewichtsanteil.

2. Mittel nach Anspruch 1, in denen die Komponente a) Propylenglykol oder Diethylenglykol ist.

3. Mittel nach Anspruch 1 oder 2, in denen die Komponente b) ein Tensid aus C₁₃-C₁₅-Oxoalkoholen ist.

4. Mittel nach den Ansprüchen 1 bis 3, in denen Komponente e) 0,05 bis 1,5 Gew.-% N-Methyl-N-Oleoylglycin ist.

## Claims

1. Aircraft deicing or antiicing compositions based on glycols and water, consisting essentially of:
a) from 80 to 92% by weight of alkylene glycol having 2 or 3 carbon atoms, an oxyalkylene glycol having 4 to 6 carbon atoms, or mixtures thereof,
b) from 0.05 to 1.0% by weight of at least one nonionic surfactant comprising alcohols having 10 to 20 carbon atoms alkoxylated with from 1 to 10 equivalents of ethylene oxide, propylene oxide or mixtures thereof,
c) from 0.1 to 0.8% by weight of polymeric carboxylic acid having a molecular weight of from 1,000 to 10,000,
d) from 0 to 1.5% by weight of ammonia or of a hydroxyalkylamine,
e) from 0 to 1.5% by weight of a further surfactant,
f) from 0.01 to 0.8% by weight of at least one corrosion inhibitor, and
g) water as remainder.

2. Compositions as claimed in claim 1 wherein component a) is propylene glycol or diethylene glycol.

3. Compositions as claimed in claim 1 or 2 wherein component b) is a surfactant from C₁₃-C₁₅ oxo alcohols.

4. Compositions as claimed in any of claims 1 to 3 wherein component e) is from 0.05 to 1.5% by weight of N-methyl-N-oleoylglycine.

## Revendications

1. Agent dégivrant ou antigivrage pour avions à base de glycols et d'eau, contenant principalement :
a) 80 à 92 % en poids d'un alkylèneglycol ayant 2-3 atomes de carbone, d'un oxyalkylèneglycol ayant 4-6 atomes de carbone ou de leurs mélanges,
b) 0,05 à 1,0 % en poids d'au moins un tensio-actif non-ionique formé à partir d'alcools ayant 10-20 atomes de carbone alcoxylés avec 1-10 équivalents d'oxyde d'éthylène, d'oxyde de propylène ou de leurs mélanges,
c) 0,1 à 0,8 % en poids d'un acide carboxylique polymère ayant une masse moléculaire de 1000 à 10 000,
d) 0 à 1,5 % en poids d'ammoniac ou d'une hydroxyalkylamine,
e) 0 à 1, 5 % en poids d'un autre tensio-actif,
f) 0,01 à 0,8 % en poids d'au moins un inhibiteur de corrosion et
g) de l'eau pour la proportion en poids restante.

2. Agents selon la revendication 1, dans lesquels le composant a) est du propylèneglycol ou du diéthylèneglycol.

3. Agents selon la revendication 1 ou 2, dans lesquels le composant b) est un tensio-actif formé à partir d'oxoalcools en C₁₃-C₁₅.

4. Agents selon l'une quelconque des revendications 1 à 3, dans lesquels le composant e) est 0,05 à 1,5 % en poids de N-méthyl-N-oléoylglycine.
